# EUROPEAN PATENT SPECIFICATION

(11) **EP 1 038 263 B1**
(45) Date of publication and mention of the grant of the patent: **11.07.2001**
(21) Application number: 98965228.4
(22) Date of filing: 03.12.1998
(51) Int. Cl.: G06K 17/00

(54) **AUTOMATIC MACHINE FOR PERSONALIZING PLASTIC CARDS, GENERALLY CREDIT CARDS**
AUTOMATISCHE MASCHINE UM PLASTIKKARTEN ZU PERSONALISIEREN , IM ALLGEMEINEN KREDITKARTEN
MACHINE AUTOMATIQUE SERVANT A PERSONNALISER DES CARTES EN PLASTIQUE, GENERALEMENT DES CARTES DE CREDIT

(30) Priority: 10.12.1997 IT VE970047
(43) Date of publication of application: 27.09.2000
(73) Proprietor: C.I.M. CARD IDENTIFICATION MACHINES S.P.A., 40012 Calderara di Reno (IT)
(72) Inventor: MUCELLI, Alberto, I-40012 Calderara di Reno (IT)
(74) Representative: Piovesana, Paolo
(86) International application number: EP9807873
(87) International publication number: WO9930274

(56) References cited:
- US-A- 4 900 168
- US-A- 5 266 781

## Description

This invention relates to an automatic machine for personalizing plastic cards, generally credit cards.

Card personalization generally involves the use of a machine comprising a single or multiple magazine from which the cards to be personalized are withdrawn one by one, an encoding station comprising a head which records on a magnetic support a series of data relative to the card, possibly a thermographing station for decorating the card surface, a punching station in which alphanumerical characters are punched or scored, a colouring station (tipper) for the relief parts of the punched characters, and finally a discharge station.

The card is transferred from the magazine to the discharge station via all the working stations by a conveyor, generally of gripper type, controlled by a logic which governs the entire machine operating cycle.

In-line machines and two-level machines are currently available. In-line machines have the advantage of a certain constructional simplicity both because the various stations are positioned in line and hence the handling members for the card to be personalized are fairly simple and subjected to a single type of unidirectional movement, and because the same components can be used for different types of machine, for example with or without the thermographing station, and with or without the colouring station. US-A-5 266 787 discloses an example of an in-line machine.

In contrast, these machines have the drawback of a considerable length due to the in-line arrangement of its various constituent stations.

In two-level machines the line of operation is divided into two vertically superposed sections connected together by an elevator. The lower section comprises the single or multiple magazine, the encoding station and the punching station, downstream of which there is an elevator moving between a lower withdrawal station for the punched card and an upper station from which the upper line section comprising the colouring station and the discharge station extends.

This machine, which virtually halves the horizontal size of the machine, has however the drawback that because in the lower line section the card travels in a certain direction whereas in the upper section it travels in the opposite direction, those stations located in the upper section are traversed by the card in the opposite direction to that which would occur if this station were located in the lower section, which means that standard equipment cannot be used without distinction in the upper section or lower section.

This problem, which in itself already complicates the machine, is accentuated if the upper section comprises a punching station, this generally being the case if the lower section comprises a thermographing station which necessarily has to be located upstream of the punching station.

According to the invention all these drawbacks are eliminated through an automatic machine as described in claim 1.

A preferred embodiment of the invention is described in detail hereinafter with reference to the accompanying drawings, on which:

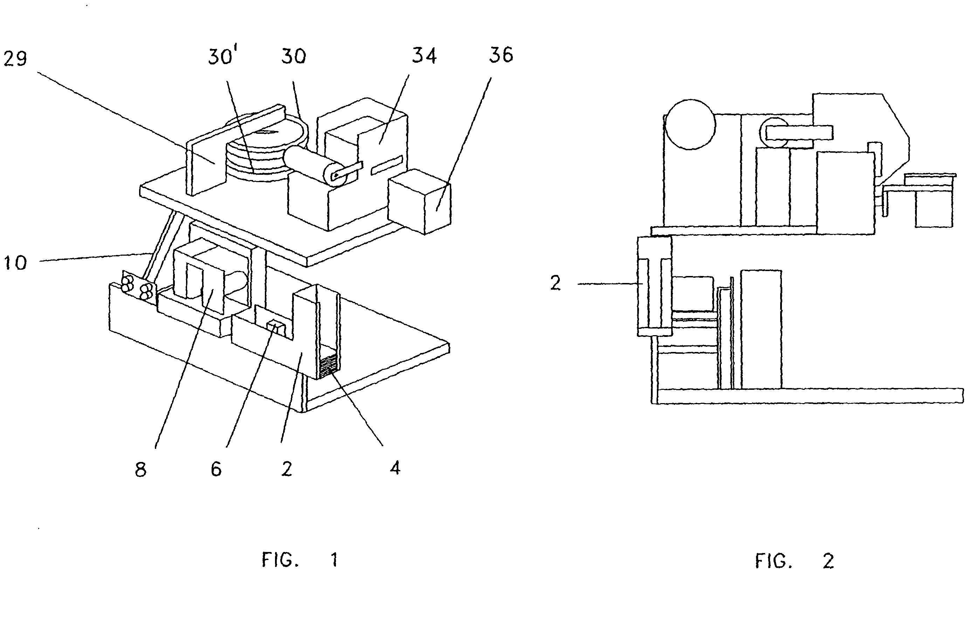

Figure 1 is a perspective view of a machine according to the invention,
Figure 2 is a front view thereof,

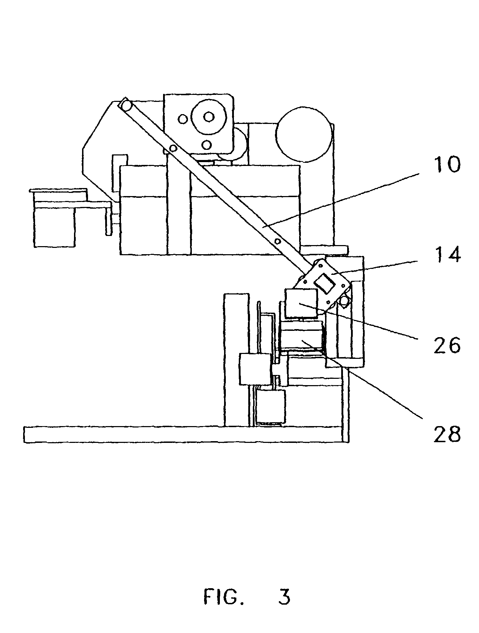

Figure 3 is a rear view thereof,

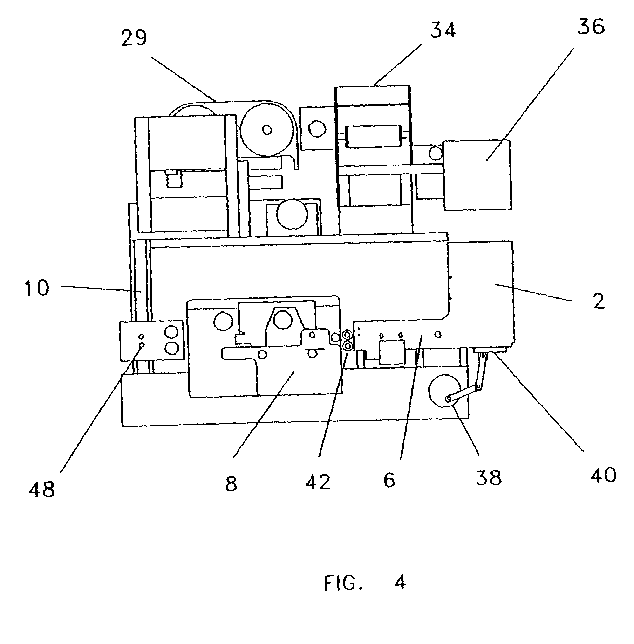

Figure 4 is a left side view thereof,

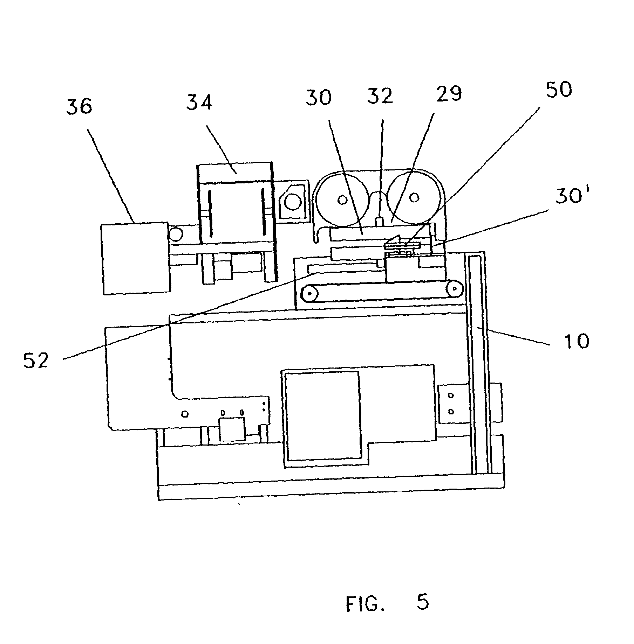

Figure 5 is a right side view thereof, and

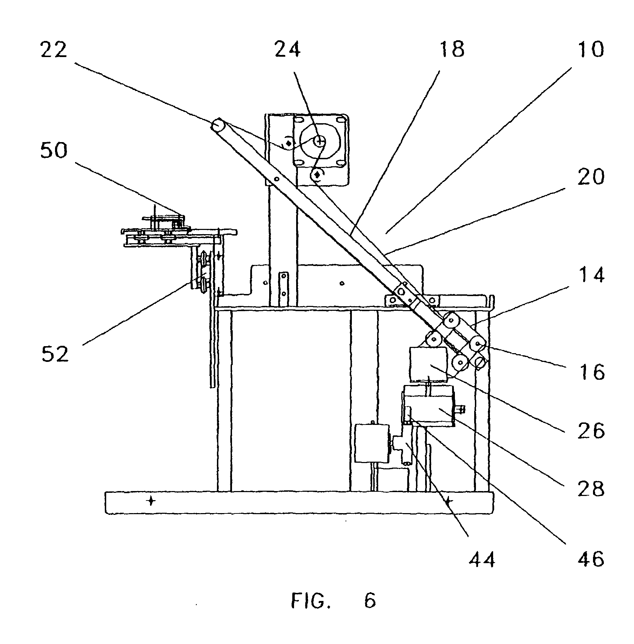

Figure 6 is a detailed view of the elevator.

As can be seen from the figures, the card personalization machine of the invention comprises:
- a magazine 2 consisting of a parallelepiped container able to contain a stack of cards 4 to be personalized. Considering that the cards are of rectangular shape, the description will use the terms "longitudinal direction" and "transverse direction" with reference respectively to the major axis and to the minor axis of each card;
- an encoding station 6 provided downstream of the magazine 2 in order to record data on a magnetic strip or to initialize a chip, provided in the card;
- a thermographing station 8 for decorating the card surface by thermal transfer of the pigment on a tape;
- an elevator 10 consisting of a structure 14 which is provided with rollers 16 sliding along an inclined guide 18 and is rigid with a toothed belt 20 extending about rollers 22, one 24 of which is motorized. On the structure 14 there is mounted a stepping motor 26 the vertical shaft of which is rigid with a cage 28 for transferring cards to a higher level, where the following are provided:

- a punching station 29 consisting of two superposed rotatable discs 30, 30', one of which, namely the upper disc 30, comprises a plurality of radial appendices (not shown) each carrying an alphanumeric character impressed in relief or a bar, the lower disc 30' also comprising radial appendices (not shown) carrying impressions corresponding to the overlying reliefs. Operating hammers 32 are provided in a position above the upper disc and below the lower disc;
- colouring station (tipper) for the relief parts, also operating on the principle of thermally transferring pigment from a tape;
- a discharge station 36.

The various electric motors, sensors and other control and operating members are governed by an internal computer (not shown) which coordinates the entire machine operating cycle as described below. On the basis of a series of instructions fed by the governing computer or possibly by the operator via the keyboard, an electric motor 38 operates a pusher 40 which engages the lower card 4 of the stack in the magazine 2 and pushes it forwards towards the encoding station where data are recorded on a magnetic band or alternatively a chip is initialized, these being provided on the card.

A series of counter-rotating rollers 42 transfers the card to the thermographing station 8 where the card is subjected to colouring treatment, then after leaving this station a motorized roller 44 cooperating with a counter-rotating roller 46 provided in the cage 28 inserts the card into the cage which at this stage is at the lower level. After a photoelectric cell 48 has sensed the presence of the card inside the cage, the motorized roller 24 is operated to elevate the cage 28 along the inclined guide 18.

Simultaneously the stepping motor 26 is operated to rotate the cage through 180° in a horizontal plane, together with the card contained in it.

When the cage 28 has reached the upper level, the card is gripped by a gripper 50 slidable along a guide 52 and is made to advance along the punching station 28 stepwise to be subjected to punching.

The card is then fed to the colouring station 34 where it is coloured by a traditional process of thermal transfer onto the relief parts, ie onto the parts previously punched. On termination of this stage the card is fed to the discharge magazine 36. In the meantime the cage has been returned to the lower level ready to receive a new card.

From the aforegoing it is apparent that the card personalization machine of the invention has numerous advantages, and in particular:
- its overall size is reduced to virtually one half that of traditional in-line machines,
- it enables standard equipment to be used on the upper or lower level indiscriminately.

## Claims

1. An automatic machine for personalizing plastic cards, characterised in that:
- it extends along two lines at different levels positioned on two different parallel sides of the machine,
- in the lower line section there are provided at least the loading magazine (2), the encoding station (6) and the thermographing station (8),
- in the upper line section there are provided at least the punching station (29) and the discharge station (36),
- an elevator (10) is provided comprising a member (28) which withdraws the card from the lower line and raises it to the upper line while at the same time transferring it from the front side of the machine to the rear side, the elevator (10) being provided with a member (26) which rotates the card through 180° about an axis perpendicular to the card surface.

2. A machine as claimed in claim 1, characterised in that the elevator (10) is arranged inclined.

3. A machine as claimed in claim 1, characterised in that the member (28) consists of a cage rigid with the vertical shaft of a stepping motor (26).

4. A machine as claimed in claim 3, characterised in that the cage (28) is mounted on a structure (14) provided with rollers (36) for sliding along an inclined guide (18), and is rigid with a toothed belt (20) extending about rollers (22), one (24) of which is motorized.

5. A machine as claimed in claim 3, characterised in that a roller (46) for inserting and expelling the card is provided within the cage (28).

## Patentansprüche

1. Automatische Maschine um Plastikkarten zu personalisieren, dadurch gekennzeichnet, daß:
- sie sich entlang von zwei Reihen auf verschiedenen Ebenen erstreckt, die auf zwei verschiedenen parallelen Seiten der Maschine angeordnet sind,
- im Abschnitt der unteren Reihe mindestens das Lademagazin (2), die Kodierstation (6) und die Temperaturschreibestation (8) bereitgestellt sind,
- im Abschnitt der oberen Reihe mindestens die Stanzstation (29) und die Entladestation (36) bereitgestellt sind,
- ein Aufzug (10) bereitgestellt ist, umfassend ein Glied (28), das die Karte von der unteren Reihe entnimmt und sie in die obere Reihe hebt, während sie sie gleichzeitig von der Vorderseite der Maschine auf die Hinterseite überträgt, wobei der Aufzug (10) ein Glied (26) umfaßt, das die Karte 1801 um eine Achse dreht, die zur Kartenoberfläche senkrecht steht.

2. Maschine, die in Anspruch 1 beansprucht wird, dadurch gekennzeichnet, daß der Aufzug (10) geneigt angeordnet ist.

3. Maschine, die in Anspruch 1 beansprucht wird, dadurch gekennzeichnet, daß das Glied (28) ein Gehäuse umfaßt, das starr mit der senkrechten Welle eines Schrittmotors (26) verbunden ist.

4. Maschine, die in Anspruch 3 beansprucht wird, dadurch gekennzeichnet, daß das Gehäuse (28) auf einer Struktur (14) befestigt ist, die mit Rollen (36) zum Gleiten entlang einer geneigten Führung (18) versehen ist, und starr mit einem Zahnriemen (20) verbunden ist, der sich um Rollen (22) erstreckt, von denen eine (24) motorisiert ist.

5. Maschine, die in Anspruch 3 beansprucht wird, dadurch gekennzeichnet, daß eine Rolle (46) zur Einführung und zum Ausstoßen der Karte im Gehäuse (28) bereitgestellt ist.

## Revendications

1. Une machine automatique pour personnaliser des cartes en plastique, caractérisée en ce que :
- elle s'étend le long de deux lignes à des niveaux différents positionnés sur deux côtés parallèles différents de la machine,
- dans la partie de la ligne inférieure sont prévus au moins le magasin de chargement (2), la station de codage (6) et la station (8) de thermographie,
- dans la partie de la ligne supérieure sont prévues au moins la station de poinçonnage (29) et la station de déchargement (36),
- un élévateur (10) est prévu et comprend un élément (28) qui retire la carte de la ligne inférieure et l'élève à la ligne supérieure en la transférant simultanément du côté avant de la machine au côté arrière, l'élévateur (10) étant pourvu d'un élément (26) qui tourne la carte de 180° autour d'un axe perpendiculaire à la surface de la carte.

2. Une machine comme revendiquée en revendication 1, caractérisée en ce que l'élévateur (10) est agencé incliné.

3. Une machine comme revendiquée en revendication 1, caractérisée en ce que l'élément (28) consiste en une cage rigide solidaire avec l'arbre vertical d'un moteur pas-à-pas (26).

4. Une machine comme revendiquée en revendication 3, caractérisée en ce que la cage (28) est montée sur une structure (14) pourvue de rouleaux (36) pour coulisser le long d'un guide incliné (18) et est solidaire d'une courroie dentée (20) s'étendant sur des rouleaux (22), dont l'un (24) est motorisé.

5. Une machine comme revendiquée dans la revendication 3, caractérisée en ce qu'un rouleau (46) d'insertion et d'extraction de la carte est prévu à l'intérieur de la cage (28).
